# EUROPEAN PATENT SPECIFICATION

(11) **EP 4 518 390 B1**
(45) Date of publication and mention of the grant of the patent: **19.08.2026**
(21) Application number: 23825989.9
(22) Date of filing: 06.05.2023
(51) Int. Cl.: H04W 72/1263, H04W 8/22

(54) **RESOURCE SCHEDULING METHOD, RESOURCE USE METHOD, NETWORK DEVICE, TERMINAL DEVICE AND MEDIUM**
RESSOURCENPLANUNGSVERFAHREN, RESSOURCENNUTZUNGSVERFAHREN, NETZWERKVORRICHTUNG, ENDGERÄT UND MEDIUM
PROCÉDÉ DE PLANIFICATION DE RESSOURCES, PROCÉDÉ D'UTILISATION DE RESSOURCES, DISPOSITIF DE RÉSEAU, DISPOSITIF TERMINAL ET SUPPORT

(30) Priority: 24.06.2022 CN 202210725080
(43) Date of publication of application: 05.03.2025
(73) Proprietor: ZTE CORPORATION, Shenzhen, Guangdong 518057 (CN)
(72) Inventor: GAO, Minggang, Shenzhen, Guangdong 518057 (CN); DING, Xuemei, Shenzhen, Guangdong 518057 (CN); LEI, Chao, Shenzhen, Guangdong 518057 (CN); WEI, Mingye, Shenzhen, Guangdong 518057 (CN)
(74) Representative: Mozzi, Matteo
(86) International application number: PCT/CN2023/092585
(87) International publication number: WO 2023/246339

(56) References cited:
- EP-A1- 4 192 156
- EP-B1- 3 573 392
- WO-A1-2022/027695
- CN-A- 105 307 107
- CN-A- 106 455 103
- CN-A- 110 662 305
- CN-A- 111 386 736
- US-A1- 2019 349 178

## Description

### Technical Field

Examples of the disclosure relates to the technical field of communication, in particular to a resource scheduling method, a resource using method, a network device, a terminal device, a storage medium and a computer program.

### Background

With the widespread application of the fifth-generation wireless communication network new radio (5G NR), 5G application in industrial fields is increasingly wider. 5G is generally applied to enhanced mobile broadband (eMBB), ultra-reliable and low latency communications (uRLLC) and massive machine type communication (mMTC). In order to better satisfy specific requirements from mid-range Internet of Things applications such as industrial wireless sensors, video surveillance and wearable devices for reduction in device complexity, costs and sizes, and lower energy consumption, the 3rd generation partnership project (3GPP) defines a reduced capability (RedCap) application scenario.

During deployment of 5G networks, if terminal devices applied in the above different application scenarios are configured to be different in type and deployed in the same 5G network, resource waste is likely to occur since resource blocks in resource block groups cannot be fully utilized by existing resource scheduling methods.

WO 2022/027695 A1 refers to information transmission method and communication apparatus and EP 3573392 B1 refers to communication method, apparatus, and system used for a resource indication in a wireless communication system; however, the above mentioned problem still remains unsolved.

### Summary

Main objectives of examples of the disclosure are to provide a resource scheduling method, a resource using method, a network device, a terminal device, and a storage medium.

The example of the disclosure further provides a resource scheduling method. The method is applied to a network device, and includes:
obtaining resource configuration information corresponding to a first type of terminal device and resource configuration information corresponding to a second type of terminal device; and generating resource occupation identification information according to the resource configuration information obtained, transmitting the resource occupation identification information to the first type of terminal device, and causing the first type of terminal device to schedule the resources according to the resource occupation identification information, where the resource occupation identification information is configured to indicate resource block occupation in an overlapping resource block group of the first type of terminal device and the second type of terminal device, wherein the resource block occupation is configured to indicate whether an unoccupied resource block exists in the overlapping resource block group.

The example of the disclosure further provides a resource using method. The method is applied to a terminal device, and includes:
receiving resource occupation identification information that is transmitted by a network device, where the resource occupation identification information is generated by the network device according to resource configuration information corresponding to a first type of terminal device and resource configuration information corresponding to a second type of terminal device, and is configured to indicate resource block occupation in an overlapping resource block group of the first type of terminal device and the second type of terminal device, wherein the resource block occupation is configured to indicate whether an unoccupied resource block exists in the overlapping resource block group. and using the resources according to the resource occupation identification information.

The example of the disclosure further provides a network device. The network device includes a processor, a memory, a computer program that is stored on the memory and executable by the processor, and a data bus configured to implement connective communication between the processor and the memory, where the computer program implements steps of any resource scheduling method applied to the network device according to the description of the disclosure when executed by the processor.

The example of the disclosure further provides a terminal device. The terminal device includes a processor, a memory, a computer program that is stored on the memory and executable by the processor, and a data bus configured to implement connective communication between the processor and the memory, where the computer program implements steps of any resource scheduling method applied to the terminal device according to the description of the disclosure when executed by the processor.

The example of the disclosure further provides a storage medium. The storage medium is configured for computer-readable storage, and stores one or more programs, where the one or more programs are executable by one or more processors, and cause to execute steps of any resource scheduling method applied to a network device or and cause to execute steps of any resource using method applied to a terminal device according to the description of the disclosure.

### Brief Description of the Drawings

To describe technical solutions in examples of the disclosure more clearly, accompanying drawings required by description of the examples will be briefly described below. Apparently, the accompanying drawings in the following description show some examples of the disclosure, and a person of ordinary skill in the art can still derive other accompanying drawings from these accompanying drawings without creative efforts.
Fig. 1 is a schematic flowchart of a resource scheduling method applied to a network device according to an example of the disclosure;
Fig. 2a is a schematic diagram of a resource distribution of bandwidth parts (BWPs) at time T1 according to an example of the disclosure;

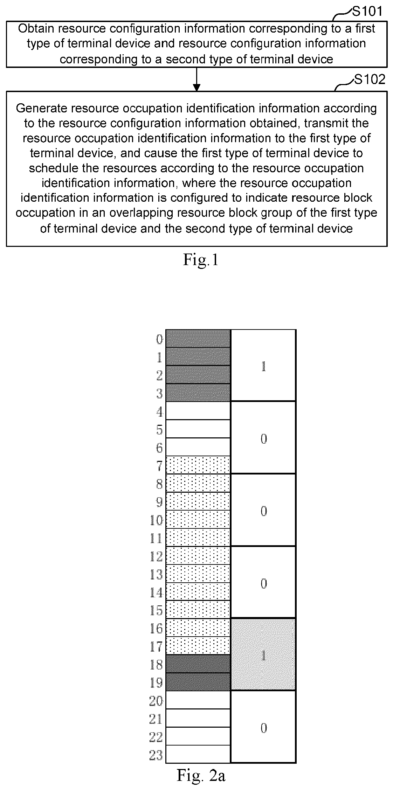

Fig. 2a is a schematic diagram of a resource distribution of BWPs at time T2 according to an example of the disclosure;

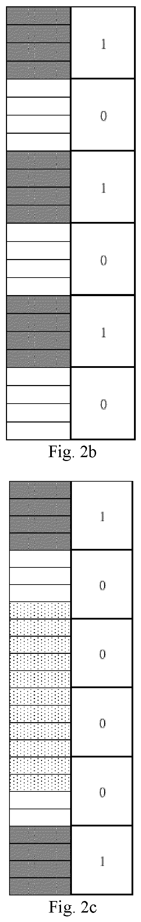

Fig. 2c is a schematic diagram of a resource distribution of BWPs at time T3 according to an example of the disclosure;

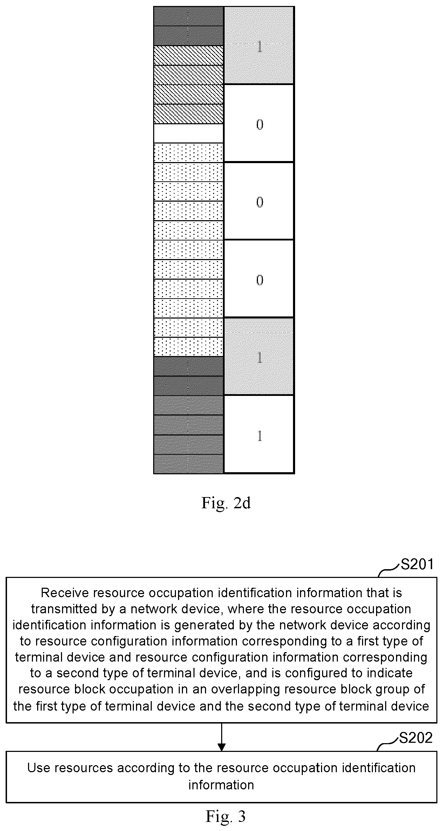

Fig. 2d is a schematic diagram of a resource distribution of BWPs at time T4 according to an example of the disclosure;
Fig. 3 is a schematic flowchart of a resource using method applied to a terminal device according to an example of the disclosure;

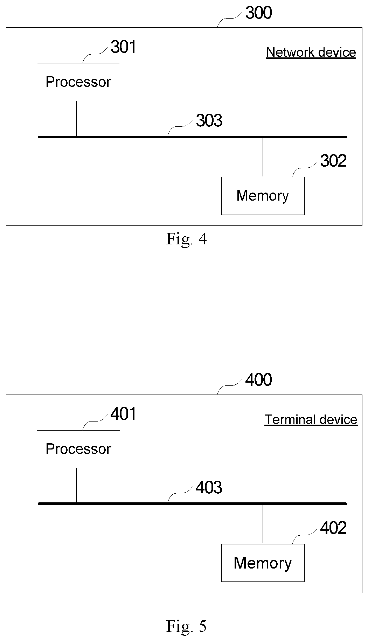

Fig. 4 is a schematic structural block diagram of a network device according to an example of the disclosure;
Fig. 5 is a schematic structural block diagram of a terminal device according to an example of the disclosure; and

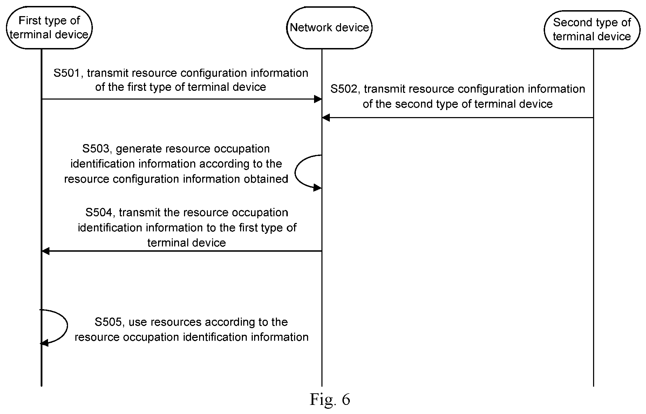

Fig. 6 is an application scenario diagram of methods for scheduling resources and using resources according to an example of the disclosure.

### Detailed Description of the Embodiments

Technical solutions in examples of the disclosure will be clearly and completely described below with reference to accompanying drawings of the examples of the disclosure. Apparently, the described examples are some examples rather than all examples of the disclosure. All other examples derived by a person of ordinary skill in the art from the examples of the disclosure without creative efforts should fall within the protection scope of the disclosure.

The flowchart shown in the accompanying drawings is merely illustrative, and not all contents and operations/steps are necessarily included or executed in described order For example, some operations/steps can be further divided, combined or partially merged, and thus, actual execution order is likely to change according to the actual situation.

It should be understood that terms used in the description of the disclosure are merely used for describing specific examples rather than limiting the disclosure. For example, as used in the description of the disclosure and the appended claims, singular forms such as "a", "an" and "this" are also intended to include plural forms, unless otherwise clearly stated in the context.

In order to better understand a solution of the example of the disclosure, the technical problems in the prior art are introduced below at first.

The 5th generation mobile communication technology (5G) includes a variety of application scenarios, such as enhanced mobile broadband (eMBB), ultra-reliable and low latency communications (uRLLC), massive machine type communication (mMTC) and reduced capability (RedCap). Generally speaking, types of terminal devices running in different application scenarios are also different. By an existing resource scheduling method, since a variety of terminal devices with different functional features are run on the same 5G network, resource blocks in each resource block group cannot be fully utilized even if each type of terminal device adopts different bandwidth parts (BWP). That is, the problem of resource allocation fragmentation will be caused. Thus, the resource blocks in each resource block group cannot be fully utilized, resulting in resource waste.

With eMBB UE and RedCap UE running on the same 5G network as an example, a peak rate is a key indicator of a performance of a terminal device. A high peak rate can be supported since a channel bandwidth supported by eMBB UE can reach 100 MHz. If RedCap UE and eMBB UE share the same carrier resource, and a BWP of the RedCap UE is in the middle of the carrier, a maximum continuous assignable resource of eMBB UE may be reduced from 100 MHz to 40M Hz, and the peak rate may be reduced by up to 60%. In consideration of bandwidth limitation of the RedCap UE, influence of resource fragmentation and a purpose of avoiding resource congestion, RedCap introduces an independent initial uplink BWP.

A network device can configure the RedCap UE and non-RedCap UE to share the same initial uplink BWP, or configure one independent initial uplink BWP for the RedCap UE in the system information block (SIB1). The independent initial uplink BWP can be used in an initial access process or after the initial access process. On one hand, the problem that a BWP bandwidth of the non-RedCap UE can be merely configured to be less than or equal to the bandwidth of the RedCap UE when the RedCap UE shares the initial uplink BWP with the non-RedCap UE since the bandwidth of the RedCap UE is narrow. On the other hand, although the fragmentation problem caused by the RedCap can be alleviated to some extent since the network device can configure the BWP of the RedCap UE near an edge of the carrier, the problem of resource allocation fragmentation still cannot be completely solved. Resources in the fragmentation cannot be adopted by any terminal device, causing waste of the resources.

Examples of the disclosure provide a resource scheduling method, a terminal device, and a storage medium. The method may be applied to a network device, such that resource blocks in each resource block group can be fully utilized, resource waste can be avoided, and a utilization rate of the resource blocks in the resource block group can be improved.

With reference to Fig.1, Fig. 1 is a schematic flowchart of a resource scheduling method according to an example of the disclosure. The resource scheduling method can make fully utilize the resource blocks in each resource block group, and avoid the resource waste. The resource scheduling method may be specifically applied to a network device, and the network device may be a device such as a base station and a gateway.

As shown in Fig. 1, the resource scheduling method may include S101 to S102.

At S101, resource configuration information corresponding to a first type of terminal device and resource configuration information corresponding to a second type of terminal device are obtained.

The resource configuration information may include a bandwidth of a bandwidth part and resource usage of the bandwidth part. The first type of terminal device is a terminal device for resource scheduling. A bandwidth of a bandwidth part corresponding to the first type of terminal device and a bandwidth of a bandwidth part corresponding to the second type of terminal device have an overlapping resource block. The bandwidth of the bandwidth part may be determined based on a range of resource blocks supported by the bandwidth part. In a specific illustrative embodiment, the broader the range of resource blocks supported by the bandwidth part is, the wider the bandwidth of a corresponding bandwidth part is.

In a specific illustrative embodiment, the bandwidth of the bandwidth part corresponding to the first type of terminal device may be wider than the bandwidth of the bandwidth part corresponding to the second type of terminal device, and may be narrower than the bandwidth of the bandwidth part corresponding to the second type of terminal device alternatively, as long as the bandwidth of the bandwidth part corresponding to the first type of terminal device and the bandwidth of the bandwidth part corresponding to the second type of terminal device have the overlapping resource block. Generally speaking, since resource occupation identification information needs to be transmitted to the first type of terminal device for resource scheduling, the bandwidth of the bandwidth part corresponding to the first type of terminal device is wide. Preferably, the bandwidth of the bandwidth part corresponding to the first type of terminal device is wider than the bandwidth of the bandwidth part corresponding to the second type of terminal device.

Illustratively, if a first terminal device and a second terminal device exists, resource configuration information corresponding to the first terminal device and resource configuration information corresponding to the second terminal device may be obtained at first. The resource configuration information includes a bandwidth of a bandwidth part. Whether a bandwidth of a bandwidth part of the first terminal device and a bandwidth of a bandwidth part of the second terminal device have an overlapping resource block is determined. A type of the first terminal device and a type of the second terminal device are determined if the bandwidth of the bandwidth part of the first terminal device and the bandwidth of the bandwidth part of the second terminal device have the overlapping resource block. It is unnecessary to use the resource scheduling method according to the example of the disclosure for resource scheduling if the bandwidth of the bandwidth part of the first terminal device and the bandwidth of the bandwidth part of the second terminal device do not have the overlapping resource block.

Illustratively, since the bandwidth of the bandwidth part corresponding to the first type of terminal device is generally wider than the bandwidth of the bandwidth part corresponding to the second type of terminal device, the resource configuration information corresponding to the first terminal device and the resource configuration information corresponding to the second terminal device may be obtained at first. The resource configuration information includes the bandwidth of the bandwidth part. Whether the bandwidth of the bandwidth part of the first terminal device is wider than the bandwidth of the bandwidth part of the second terminal device is determined. It is determined that the first terminal device is a first type of terminal device and the second terminal device is a second type of terminal device if the bandwidth of the bandwidth part of the first terminal device is wider than the bandwidth of the bandwidth part of the second terminal device. It is determined that the second terminal device is a first type of terminal device and the first terminal device is a second type of terminal device if the bandwidth of the bandwidth part of the first terminal device is not wider than the bandwidth of the bandwidth part of the second terminal device.

Illustratively, the first type of terminal device and the second type of terminal device correspond to terminal devices applied in different application scenarios. The peak rate is the key indicator of the performance of the terminal device, and the channel bandwidth supported by eMBB UE can reach 100 MHz, such that a high peak rate can be supported, a bandwidth of a bandwidth part corresponding to the eMBB UE is wide, and the first type of terminal device can generally be the eMBB UE. Since the first type of terminal device is the eMBB UE, the second type of terminal device can include one or more of RedCap UE, uRLLC UE and mMTC UE.

Illustratively, the first type of terminal device may further be the RedCap UE, the uRLLC UE or the mMTC UE, and the second type of terminal device may be determined according to the bandwidth of the bandwidth part corresponding to the first type of terminal device. If the first type of terminal device is the uRLLC UE and the bandwidth of the bandwidth part corresponding to uRLLC UE is wider than a bandwidth corresponding to the RedCap UE, the second type of terminal device is the RedCap UE.

At S102, resource occupation identification information is generated according to the resource configuration information obtained, the resource occupation identification information is transmitted to the first type of terminal device, and the first type of terminal device is caused to schedule the resources according to the resource occupation identification information. The resource occupation identification information is configured to indicate resource block occupation in an overlapping resource block group of the first type of terminal device and the second type of terminal device.

The resource occupation identification information is configured to indicate the resource block occupation in the overlapping resource block group of the first type of terminal device and the second type of terminal device, and the resource block occupation is configured to indicate whether an unoccupied resource block exits in the overlapping resource block group. The resource block (RB) is a unit of a bandwidth occupied by a service resource. The resource block group (RBG) includes a plurality of resource blocks, and a granularity of each RBG may be specifically determined according to a size of resources of the entire BWP. In general, the wider the bandwidth is, the coarser the granularity is. In the prior art, all resource blocks in the resource block group are allocated to the same type of UE or neither of the resource blocks are allocated. If a resource block in the resource block group cannot be allocated for some reason, neither of the resources are allocated.

In this example, the resource configuration information corresponding to the first type of terminal device and the resource configuration information corresponding to the second type of terminal device are obtained, the resource occupation identification information is generated according to the resource configuration information, and the resource occupation identification information is transmitted to the first type of terminal device, such that the first type of terminal device schedules the resources according to the resource occupation identification information. Thus, the resource blocks in each resource block group can be fully utilized, the resource waste can be avoided, and the utilization rate of the resource blocks in the resource block group can be improved.

In a specific illustrative embodiment, the resource occupation identification information may fill downlink control information (DCI), and the downlink control information may be transmitted to the first type of terminal device, such that the first type of terminal device obtains the resource occupation identification information by parsing the downlink control information, and schedules the resources according to the resource occupation identification information.

In some examples, the resource configuration information further includes the resource usage of the bandwidth part, and whether the first type of terminal device and the second type of terminal device use the same resource block group is determined according to the resource usage of the bandwidth part. The resource block occupation of the same resource block group is determined according to the bandwidth of the bandwidth part in a case that the first type of terminal device and the second type of terminal device use the same resource block group. The resource occupation identification information is generated according to the resource block occupation situation of the same resource block group. Thus, the resource block occupation in each resource block group can be accurately determined, and the first type of terminal device can schedule the resources according to the resource block occupation in each resource block group.

The resource usage of the bandwidth part is configured to indicate a resource block group to be used by the first type of terminal device.

Illustratively, with reference to Figs. 2a and 2b, it is assumed that two BWPs are configured, with a total of 24 RBs, each RBG includes 4 RBs, an RB range of a BWP0 is 0-23 (24 RBs in total), and eMBUE runs on the BWP0. An RB range of a BWP1 is 7-17 (11 RBs in total), and RedCap UE runs on the BWP1. As shown in Fig. 2a, at time T1, an RB range of the resource block group to be used by the eMBB UE is 0-3 and 16-19. As shown in Fig. 2b, at time T2, an RB range of the resource block group to be used by the eMBB UE is 0-3, 8-11 and 16-19. Specifically, the resource block group to be used by the terminal device may be denoted by bits (if it indicates that the terminal device needs to use the resource block group, 1 is displayed in an information bit corresponding to the resource block group; and if it indicates that the terminal device does not need to use the resource block group, 0 is displayed in an information bit corresponding to the resource block group.

In a specific illustrative embodiment, whether the first type of terminal device and the second type of terminal device use the same resource block group is determined according to the resource usage of the bandwidth part. The resource block occupation of the same resource block group is determined according to the bandwidth of the bandwidth part in a case that the first type of terminal device and the second type of terminal device use the same resource block group. The first type of terminal device and the second type of terminal device can use resource blocks in respective corresponding resource block groups in a case that the first type of terminal device and the second type of terminal device do not use the same resource block group, avoiding waste of resources.

Illustratively, as shown in Fig. 2a, the RB range of the resource block group to be used by the eMBB UE is 0-3 and 16-19, and the RB range of the RedCap UE is 7-17, that is, the RB range of the resource block group used is 4-7, 8-11, 12-15 and 16-19. Thus, it can be concluded that the eMBB UE and the RedCap UE need to use the same resource block group, that is, the first type of terminal device and the second type of terminal device have an overlapping resource block. As shown in Fig. 2c, at T3, the RB range of the resource block group to be used by the eMBB UE is 0-3 and 20-23, and the RB range of the RedCap UE is 7-17. Thus, it can be concluded that the eMBB UE and the RedCap UE do not need to use the same resource block group, that is, the first type of terminal device and the second type of terminal device do not have an overlapping resource block group.

In some examples, whether an unoccupied resource block exists in the same resource block group is determined according to the bandwidth of the bandwidth part. It is determined that the unoccupied resource blocks is a target resource block in a case that the unoccupied resource block exists in the same resource block group. The resource block occupation of the same resource block group is determined according to the target resource block. Thus, the target resource block can be accurately determined, and the first type of terminal device can use the target resource block for resource scheduling.

The target resource block is an unoccupied resource block in the overlapping resource block group of the first type of terminal device and the second type of terminal device.

In a specific illustrative embodiment, whether the unoccupied resource block exits in the same resource block group is determined according to the bandwidth of the bandwidth part. A case that no unoccupied resource block exits in the same resource block group indicates that all resource blocks in the overlapping resource block group are occupied, and no unoccupied resource block exists. In this case, it can be indicated by a bit of 0 that no target resource block exists in the resource block groups. A case that the unoccupied resource block exits in the same resource block group indicates that some resource blocks in the overlapping resource block group are occupied, and it is determined that an unoccupied resource block is the target resource block. In this case, it can be indicated by a bit of 1 that the target resource block exits in the resource block groups.

Illustratively, as shown in Fig. 2a, RB ranges to be used by the eMBB UE and the RedCap UE are 16-19 resource block groups. In the prior art, all the resource blocks in the resource block group can be merely allocated to the same type of UE, all the resource block groups with the RB range of 16-19 may be merely allocated to the RedCap UE, but the RedCap UE does not utilize RBs of 18 and 19, thus causing waste of resources. Thus, the resource block occupation of the overlapping resource block group can be determined according to the bandwidth of bandwidth part. Since the bandwidth of bandwidth part of the RedCap UE indicates a corresponding RB range of 7-17, the resource block occupation of the overlapping resource block group can be determined. Specifically, the RedCap UE actually occupies RBs of 16 and 17 merely, but does not occupy RBs of 18 and 19, that is, the RBs of 18 and 19 are target resource blocks. Thus, the resource occupation identification information is generated according to the resource block occupation of the overlapping resource block group.

In some examples, when the second type of terminal device includes two or more types of terminals, a third type of terminal device is further included equivalently. The bandwidth of the bandwidth part corresponding to the first type of terminal device is wider than the bandwidth of the bandwidth part corresponding to the second type of terminal device and a bandwidth of a bandwidth part corresponding to the third type of terminal device.

In a specific illustrative embodiment, resource configuration information corresponding to the first type of terminal device, resource configuration information corresponding to the second type of terminal device and resource configuration information corresponding to the third type of terminal device are obtained. Resource occupation identification information is generated according to the resource configuration information obtained, the resource occupation identification information is transmitted to the first type of terminal device, and the first type of terminal device is caused to schedule the resources according to the resource occupation identification information. The resource occupation identification information is configured to indicate resource block occupation in an overlapping resource block group of the first type of terminal device and the second type of terminal device and/or the third type of terminal device.

Illustratively, with reference to Figs. 2b, it is assumed that three BWPs are configured, with a total of 24 RBs, each RBG includes 4 RBs, an RB range of a BWP0 is 0-23 (24 RBs in total), and eMBUE runs on the BWP0. An RB range of a BWP1 is 7-17 (11 RBs in total), and the RedCap UE runs on the BWP1. An RB range of a BWP2 is 3-6 (4 RBs in total), and uRLLC UE runs on the BWP2.

As shown in Fig. 2b, at time T4, an RB range of a resource block group to be used by the eMBB UE is 0-3, 16-19 and 20-23, an RB range of the RedCap UE is 7-17, and an RB range of the uRLLC UE is 3-6. Thus, it can be concluded that all the eMBB UE, the RedCap UE and the uRLLC UE need to use the same resource block group, that is, the first type of terminal device has an overlapping resource block group with each of the second type of terminal device and the third type of terminal device. Thus, the resource block occupation of the overlapping resource block group can be determined according to the bandwidth of bandwidth part. Since the bandwidth of bandwidth part of the RedCap UE indicates a corresponding RB range of 7-17, the resource block occupation of the overlapping resource block group can be determined. Specifically, the RedCap UE actually merely occupies RBs of 16 and 17, but does not occupy RBs of 18 and 19, that is, the RBs of 18 and 19 are target resource blocks. Similarly, it can be concluded that the uRLLC UE actually merely occupies RBs of 2 and 3, but does not occupy RBs of 0 and 1, that is, the RBs of 0 and 1 are target resource blocks. Thus, the resource occupation identification information is generated according to the resource block occupation of the overlapping resource block group.

In a specific illustrative embodiment, with reference to Figs. 2a-2d, as shown in Fig. 2a, the target resource blocks exist in the resource block groups at time T1, which may be indicated by a bit of 1. A BWP corresponding to the target resource block is the BWP1, and it can be indicated by a bit of 10 that the BWP corresponding to the target resource block at time T1 is the BWP1. As shown in Fig. 2b, no target resource block exists in the resource block groups at time T2, which may be indicated by a bit of 0. Since no target resource block exists in the resource block groups at this time, it can be indicated by a bit of 00 that no target resource block exists at time T2. As shown in Fig. 2c, no target resource block exists in the resource block groups at time T3, which may be indicated by a bit of 0. Since no target resource block exists in the resource block groups at this time, it can be indicated by a bit of 00 that no target resource block exists at time T3. As shown in Fig. 2d, the target resource blocks exist in the resource block groups at time T4, which may be indicated by a bit of 1. Since the target resource blocks exist in the resource block groups at this time, it can be indicated by a bit of 11 that the BWP corresponding to the target resource block at time T4 is a BWP1 and a BWP2.

Corresponding resource occupation identification information at each moment of time may be generated, as shown in Table 1.

**Table 1**

| Time | Indication that some resources are occupied (1 bit) | BWP position indication of an occupied resource (in bit order of BWP1 and BWP2) |
|---|---|---|
| T1 | 1 | 10 |
| T2 | 0 | 00 |
| T3 | 0 | 00 |
| T4 | 1 | 11 |

The resource occupation identification information is transmitted to the first type of terminal device finally, and the first type of terminal device is caused to schedule the resources according to the resource occupation identification information.

With reference to Fig. 3, Fig. 3 is a schematic flowchart of a resource using method according to an example of the disclosure. The resource using method can make fully utilize the resource blocks in each resource block group, and avoid the resource waste. The resource using method may be specifically applied to a terminal device. The terminal device may be, but is not limited to, a smart phone, a portable android computer, a laptop computer, a desktop computer, a smart speaker and a smart watch.

As shown in Fig. 3, the resource using method includes S201 to S202:
At S201, resource occupation identification information that is transmitted by a network device is received. The resource occupation identification information is generated by the network device according to resource configuration information corresponding to a first type of terminal device and resource configuration information corresponding to a second type of terminal device, and is configured to indicate resource block occupation in an overlapping resource block group of the first type of terminal device and the second type of terminal device.

The resource using method may be specifically applied to the first type of terminal device, and the bandwidth of the bandwidth part corresponding to the first type of terminal device and the bandwidth of the bandwidth part corresponding to the second type of terminal device have an overlapping resource block. In a specific illustrative embodiment, the resource occupation identification information may be generated through S101 to S102.

At S202, the resources are used according to the resource occupation identification information.

The resource occupation identification information is generally placed in downlink control information, and the downlink control information needs to be parsed at first to obtain the resource occupation identification information, such that the first type of terminal device can use the resources according to the resource occupation identification information.

In some examples, a target resource block is obtained by parsing the resource occupation identification information. The target resource block is an unoccupied resource block in the overlapping resource block group of the first type of terminal device and the second type of terminal device. The resources are used according to the target resource block. Thus, the target resource block can be accurately parsed, and the first type of terminal device can use the resources by using the target resource block for an operation such as data processing.

In a specific illustrative embodiment, after the resource occupation identification information is received, whether a bit corresponding to an indication that some resources are occupied is 1 is determined according to the resource occupation identification information, and whether a target resource block exists is further determined. If the target resource block exists, a BWP position indication of an occupied resource is determined, whether the BWP corresponding to the target resource block is a BWP1 or a BWP2 is further determined, the target resource block is obtained through parsing, and the resources are used according to the target resource block.

Illustratively, as shown in Fig. 2d, it is determined that the target resource blocks exist in the resource block groups at time T4 since the bit corresponding to the indication that some resources are occupied is 1. Then it is determined by the bit of 11 that the BWP corresponding to the target resource block is the BWP1 and the BWP2 according to the BWP position indication of the occupied resource. A corresponding target resource block is found and the resources are used by using these target resource blocks.

With reference to Fig. 4, Fig. 4 is a schematic structural block diagram of a network device according to an example of the disclosure.

As shown in Fig. 4, the network device 300 may include a processor 301 and a memory 302. The processor 301 and the memory 302 are connected through a bus 303, and the bus is, for example, an inter-integrated circuit (I2C) bus.

In an illustrative embodiment, the processor 301 may be configured to provide computation and control capabilities, to support running of the entire terminal device. The processor 301 may be a central processing unit (CPU). The processor 301 may be further another general-purpose processor, a digital signal processor (DSP), an application specific integrated circuit (ASIC), a field-programmable gate array (FPGA), or another programmable logic device, a discrete gate or transistor logic device, a discrete hardware component, etc. The general-purpose processor may be a microprocessor, and the processor may be further any conventional processor, etc.

In a specific illustrative embodiment, the memory 302 may be a flash chip, a read-only memory disk, an optical disk, a USB flash disk or a mobile hard disk.

It can be understood by those skilled in the art that Fig. 4 is merely a partial block diagram of a structure related to the solution of the example of the disclosure, and does not constitute limitation to the terminal device to which the solution of the example of the disclosure is applied. A specific server may include more or less components than those shown in the figure, combine some components, or have different component arrangements.

The processor 301 is configured to run a computer program stored on a memory, and implement any resource scheduling method applied to the network device according to the example of the disclosure when executing the computer program.

In an example, the processor 301 is configured to run the computer program stored on the memory and implement, when executing the computer program, the following: resource configuration information corresponding to a first type of terminal device and resource configuration information corresponding to a second type of terminal device are obtained. Resource occupation identification information is generated according to the resource configuration information obtained, the resource occupation identification information is transmitted to the first type of terminal device, and the first type of terminal device is caused to schedule the resources according to the resource occupation identification information. The resource occupation identification information is configured to indicate resource block occupation in an overlapping resource block group of the first type of terminal device and the second type of terminal device.

In an example, the resource configuration information includes a bandwidth of a bandwidth part, and a bandwidth of a bandwidth part corresponding to the first type of terminal device and a bandwidth of a bandwidth part corresponding to the second type of terminal device have an overlapping resource block.

In an example, the resource configuration information further includes the resource usage of the bandwidth part, and the processor 301 is configured to implement, when the step that resource occupation identification information is generated according to the resource configuration information is implemented, the following: whether the first type of terminal device and the second type of terminal device use the same resource block group is determined according to the resource usage of the bandwidth part. The resource block occupation of the same resource block group is determined according to the bandwidth of the bandwidth part in a case that the first type of terminal device and the second type of terminal device use the same resource block group. The resource occupation identification information is generated according to the resource block occupation situation of the same resource block group.

In an example, the processor 301 is configured to implement, when implementing the step that the resource block occupation of the overlapping resource block group is determined according to the bandwidth of the bandwidth part, the following: whether an unoccupied resource block exists in the same resource block group is determined according to the bandwidth of the bandwidth part. It is determined that the unoccupied resource blocks is a target resource block in a case that the unoccupied resource block exists in the same resource block group. The resource block occupation of the same resource block group is determined according to the target resource block.

In an example, the first type of terminal device includes an eMBB terminal device, and the second type of terminal device includes one or more of an RedCap terminal device, an uRLLC terminal device and an mMTC terminal device.

With reference to Fig. 5, Fig. 5 is a schematic structural block diagram of a terminal device according to an example of the disclosure.

As shown in Fig. 5, the terminal device 400 may include a processor 401 and a memory 402. The processor 401 and the memory 402 are connected through a bus 403, and the bus is, for example, an inter-integrated circuit (I2C) bus.

In an illustrative embodiment, the processor 401 may be configured to provide computation and control capabilities, to support running of the entire terminal device. The processor 401 may be a central processing unit (CPU). The processor 401 may alternatively be another general-purpose processor, a digital signal processor (DSP), an application specific integrated circuit (ASIC), a field-programmable gate array (FPGA), another programmable logic device, a discrete gate or transistor logic device, a discrete hardware component, or the like. The general-purpose processor may be a microprocessor, any conventional processor, or the like.

In a specific illustrative embodiment, the memory 402 may be a flash chip, a read-only memory disk, an optical disk, a USB flash disk or a mobile hard disk.

It can be understood by those skilled in the art that Fig. 5 is merely a partial block diagram of a structure related to the solution of the example of the disclosure, and does not constitute limitation to the terminal device to which the solution of the example of the disclosure is applied. A specific server may include more or less components than those shown in the figure, combine some components, or have different component arrangements.

The processor 404 is configured to run a computer program stored on a memory, and implement any resource using method applied to the terminal device according to the example of the disclosure when executing the computer program.

In an example, the processor 401 is configured to run the computer program stored on the memory and implement, when implementing the computer program, the following: resource occupation identification information that is transmitted by a network device is received. The resource occupation identification information is generated by the network device according to resource configuration information corresponding to a first type of terminal device and resource configuration information corresponding to a second type of terminal device, and is configured to indicate resource block occupation in an overlapping resource block group of the first type of terminal device and the second type of terminal device. The resources are scheduled according to the resource occupation identification information.

In an example, the processor 401 is configured to implement, when implementing the step that the resources are scheduled according to the resource occupation identification information, the following: a target resource block is obtained by parsing the resource occupation identification information. The target resource block is an unoccupied resource block in the overlapping resource block group of the first type of terminal device and the second type of terminal device. The resources are scheduled according to the target resource block.

It should be noted that those skilled in the art can clearly understand that for the convenience and conciseness of description, reference can be made to a corresponding process in the example of the resource scheduling method for a specific work process of the terminal device described above, which will not be repeated herein.

With reference to Fig. 6, Fig. 6 is a schematic diagram of application scenarios of methods for scheduling resources and using resources according to an example of the disclosure. The methods for scheduling resources and using resources may be applied to a networking scenario of a network device, a first type of terminal device and a second type of terminal device, such that resource blocks in each resource block group can be fully utilized and resource waste can be avoided.

In a specific illustrative embodiment, a networking method may include S501 to S505.

At S501, resource configuration information is transmitted to the network device by the first type of terminal device.

At S502, the resource configuration information is transmitted to the network device by the second type of terminal device.

At S503, resource occupation identification information is generated by the network device according to the resource configuration information obtained.

At S504, the resource occupation identification information is transmitted to the first type of terminal device by the network device.

At S505, the resources are used by the first type of terminal device according to the resource occupation identification information.

The example of the disclosure further provides a storage medium. The storage medium is configured for computer-readable storage, and the storage medium stores one or more programs. The one or more programs are executable by one or more processors, so as to implement steps of any resource scheduling method applied to a network device or steps of any resource using method applied to a terminal device according to the example of the description of the disclosure.

The storage medium may be an internal storage unit of the terminal device described in the foregoing example, such as a hard disk or a memory of the terminal device. The storage medium may also be an external storage device of the terminal device, such as a plug-in hard disk, a smart media card (SMC), a secure digital (SD) card and a flash card configured on the terminal device.

It can be understood by a person of ordinary skill in the art that all or some steps, and functional modules/units in the system and the apparatus of the method described above may be implemented as software, firmware, hardware and their appropriate combinations. In an example of the hardware, division between the functional modules/units mentioned in the above description does not necessarily correspond to division of physical components. For example, a physical component may have a plurality of functions, or a function or a step may be cooperatively executed by several physical components. Some physical components or all physical components may be implemented as software executed by the processor, such as a central processing unit, a digital signal processor or a microprocessor, or as hardware, or as an integrated circuit, such as an application-specific integrated circuit. Such software may be distributed on the computer-readable medium. The computer-readable medium may include a computer storage medium (or a non-transitory medium) and a communication medium (or a transitory medium). As well known to those skilled in the art, the term computer storage medium includes volatile, nonvolatile, removable and non-removable media implemented in any method or technology for storing information (such as a computer-readable instruction, a data structure, a program module or other data). The computer storage medium includes, but is not limited to, a random access memory (RAM), a read only memory (ROM), an electrically erasable programmable read-only memory (EEPROM), a flash memory or other memory technologies, a compact disc read-only memory (CD-ROM), a digital versatile disc (DVD) or other optical disk storages, magnetic cassettes, magnetic tapes, magnetic disk storages or other magnetic storage apparatuses, or any other media that may be used to store desired information and may be accessed by computers. Furthermore, it is well known to those skilled in the art that the communication medium typically includes the computer-readable instruction, the data structure, the program module or other data in, for example, a carrier wave or a modulated data signal of other transmission mechanisms, and may include any information delivery medium.

It should be understood that the term "and/or" used in the description of the disclosure and the appended claims refers to any combination and all possible combinations of one or more of the associated listed items, and includes these combinations. It should be noted that in this context, the terms "comprise", "include" or their any other variations are intended to cover non-exclusive inclusions, such that a process, a method, an article or a system including a series of elements include those elements, and further include other elements not listed clearly, or further include elements inherent to such a process, method, article or system. Without more limitation, an element limited by the phrase "comprise a..."or "include a..." does not exclude other same element existing in the process, method, article or system including the element.

## Claims

1. A resource scheduling method, applied to a network device, comprising:
obtaining (S101) resource configuration information corresponding to a first type of terminal device and resource configuration information corresponding to a second type of terminal device; and
generating (S102) resource occupation identification information according to the resource configuration information obtained, transmitting the resource occupation identification information to the first type of terminal device, and causing the first type of terminal device to schedule the resources according to the resource occupation identification information, wherein the resource occupation identification information is configured to indicate resource block occupation in an overlapping resource block group of the first type of terminal device and the second type of terminal device, wherein the resource block occupation is configured to indicate whether an unoccupied resource block exists in the overlapping resource block group.

2. The method according to claim 1, wherein the resource configuration information comprises a bandwidth of a bandwidth part, and a bandwidth of a bandwidth part corresponding to the first type of terminal device and a bandwidth of a bandwidth part corresponding to the second type of terminal device have an overlapping resource block.

3. The method according to claim 2, wherein the resource configuration information further comprises resource usage of the bandwidth part, and the generating resource occupation identification information according to the resource configuration information comprises:
determining whether the first type of terminal device and the second type of terminal device use the same resource block group according to the resource usage of the bandwidth part;
determining resource block occupation of the same resource block group according to the bandwidth of the bandwidth part in a case that the first type of terminal device and the second type of terminal device use the same resource block group; and
generating the resource occupation identification information according to the resource block occupation of the same resource block group.

4. The method according to claim 3, wherein the determining resource block occupation of the same resource block group according to the bandwidth of the bandwidth part comprises:
determining whether an unoccupied resource block exists in the same resource block group according to the bandwidth of the bandwidth part;
determining that the unoccupied resource block is a target resource block in a case that the unoccupied resource block exists in the same resource block group; and
determining the resource block occupation of the same resource block group according to the target resource block.

5. The method according to claim 1, wherein the first type of terminal device comprises a terminal device corresponding to an enhanced mobile broadband scenario, and the second type of terminal device comprises one or more of a terminal device corresponding to a reduced capability scenario, a terminal device corresponding to a ultra-reliable and low latency communications scenario, and a terminal device corresponding to a massive machine type communication scenario.

6. The method according to claim 2, the bandwidth of the bandwidth part corresponding to the first type of terminal device is wider than the bandwidth of the bandwidth part corresponding to the second type of terminal device, or the bandwidth of the bandwidth part corresponding to the first type of terminal device is narrower than the bandwidth of the bandwidth part corresponding to the second type of terminal device.

7. The method according to claim 1, wherein the resource occupation identification information is carried in downlink control information, DCI, and transmitted to the first type of terminal device.

8. The method according to claim 1, the second type of terminal device further comprises a third type of terminal device.

9. The method according to claim 9, wherein the resource occupation identification information is configured to indicate resource block occupation in an overlapping resource block group of the first type of terminal device and the second type of terminal device and the third type of terminal device.

10. A resource using method, applied to a terminal device, comprising:
receiving (S201) resource occupation identification information that is transmitted by a network device, wherein the resource occupation identification information is generated by the network device according to resource configuration information corresponding to a first type of terminal device and resource configuration information corresponding to a second type of terminal device, and is configured to indicate resource block occupation in an overlapping resource block group of the first type of terminal device and the second type of terminal device, wherein the resource block occupation is configured to indicate whether an unoccupied resource block exists in the overlapping resource block group; and
using (S202) the resources according to the resource occupation identification information.

11. The method according to claim 10, wherein the using the resources according to the resource occupation identification information comprises:
obtaining a target resource block by parsing the resource occupation identification information, wherein the target resource block is an unoccupied resource block in the overlapping resource block group of the first type of terminal device and the second type of terminal device; and
using the resources according to the target resource block.

12. A network device, comprising:
a processor (301), a memory (302), a computer program that is stored on the memory (302) and executable by the processor (301), and a data bus (303) configured to implement connective communication between the processor (301) and the memory (302), wherein the computer program is configured to, when executed by the processor (301), implement steps of the resource scheduling method as claimed in any one of claims 1 to 10.

13. A terminal device, comprising:
a processor (401), a memory (402), a computer program that is stored on the memory (402) and executable by the processor (401), and a data bus (403) configured to implement connective communication between the processor (401) and the memory (402), wherein the computer program is configured to, when executed by the processor (401), implement steps of the resource using method as claimed in any one of claims 10 to 11.

14. A computer-readable storage medium, storing one or more programs, wherein the one or more programs are configured to, when executed by one or more processors, cause the network device to implement steps of the resource scheduling method as claimed in any one of claims 1 to 9, or cause the terminal device to implement steps of the resource using method as claimed in any one of claims 10 to 11.

15. A computer program comprising instructions,
wherein the computer program, when executed by a processor, cause the network device to perform steps of the resource scheduling method as claimed in any one of claims 1 to 9, or cause the terminal device to perform steps of the resource using method as claimed in any one of claims 10 to 11.

## Patentansprüche

1. Ressourcenplanungsverfahren, das auf eine Netzwerkvorrichtung angewendet wird, umfassend:
Erhalten (S101) von Ressourcenkonfigurationsinformationen, die einem ersten Typ von Endgerät entsprechen, und Ressourcenkonfigurationsinformationen, die einem zweiten Typ von Endgerät entsprechen; und
Erzeugen (S102) von Ressourcenbelegungsidentifikationsinformationen gemäß den erhaltenen Ressourcenkonfigurationsinformationen, Übertragen der Ressourcenbelegungsidentifikationsinformationen an den ersten Typ von Endgerät und Veranlassen des ersten Typs von Endgerät, die Ressourcen gemäß den Ressourcenbelegungsidentifikationsinformationen zu planen, wobei die Ressourcenbelegungsidentifikationsinformationen so konfiguriert sind, dass sie eine Ressourcenblockbelegung in einer überlappenden Ressourcenblockgruppe des ersten Typs von Endgerät und des zweiten Typs von Endgerät angeben, wobei die Ressourcenblockbelegung so konfiguriert ist, dass sie angibt, ob ein unbelegter Ressourcenblock in der überlappenden Ressourcenblockgruppe existiert.

2. Verfahren nach Anspruch 1, wobei die Ressourcenkonfigurationsinformationen eine Bandbreite eines Bandbreitenteils umfassen und eine Bandbreite eines Bandbreitenteils, die dem ersten Typ von Endgerät entspricht, und eine Bandbreite eines Bandbreitenteils, die dem zweiten Typ von Endgerät entspricht, einen überlappenden Ressourcenblock aufweisen.

3. Verfahren nach Anspruch 2, wobei die Ressourcenkonfigurationsinformationen ferner eine Ressourcennutzung des Bandbreitenteils umfassen und das Erzeugen von Ressourcenbelegungsidentifikationsinformationen gemäß den Ressourcenkonfigurationsinformationen umfasst:
Bestimmen, ob der erste Typ von Endgerät und der zweite Typ von Endgerät dieselbe Ressourcenblockgruppe verwenden, gemäß der Ressourcennutzung des Bandbreitenteils;
Bestimmen der Ressourcenblockbelegung derselben Ressourcenblockgruppe gemäß der Bandbreite des Bandbreitenteils in einem Fall, in dem der erste Typ von Endgerät und der zweite Typ von Endgerät dieselbe Ressourcenblockgruppe verwenden; und
Erzeugen der Ressourcenbelegungsidentifikationsinformationen gemäß der Ressourcenblockbelegung derselben Ressourcenblockgruppe.

4. Verfahren nach Anspruch 3, wobei das Bestimmen der Ressourcenblockbelegung derselben Ressourcenblockgruppe gemäß der Bandbreite des Bandbreitenteils umfasst:
Bestimmen, ob ein unbelegter Ressourcenblock in derselben Ressourcenblockgruppe existiert, gemäß der Bandbreite des Bandbreitenteils;
Bestimmen, dass der unbelegte Ressourcenblock ein Zielressourcenblock ist, in einem Fall, in dem der unbelegte Ressourcenblock in derselben Ressourcenblockgruppe existiert; und
Bestimmen der Ressourcenblockbelegung derselben Ressourcenblockgruppe gemäß dem Zielressourcenblock.

5. Verfahren nach Anspruch 1, wobei der erste Typ von Endgerät ein Endgerät umfasst, das einem Szenario mit erweitertem mobilem Breitband entspricht, und der zweite Typ von Endgerät ein oder mehrere von einem Endgerät, das einem Szenario mit reduzierter Leistungsfähigkeit entspricht, einem Endgerät, das einem Szenario für ultrazuverlässige Kommunikation mit geringer Latenz entspricht, und einem Endgerät, das einem Szenario für massive Maschinentyp-Kommunikation entspricht, umfasst.

6. Verfahren nach Anspruch 2, wobei die Bandbreite des Bandbreitenteils, die dem ersten Typ von Endgerät entspricht, breiter ist als die Bandbreite des Bandbreitenteils, die dem zweiten Typ von Endgerät entspricht, oder die Bandbreite des Bandbreitenteils, die dem ersten Typ von Endgerät entspricht, schmaler ist als die Bandbreite des Bandbreitenteils, die dem zweiten Typ von Endgerät entspricht.

7. Verfahren nach Anspruch 1, wobei die Ressourcenbelegungsidentifikationsinformationen in Downlink-Steuerungsinformationen (DCI) mitgeführt und an den ersten Typ von Endgerät übertragen werden.

8. Verfahren nach Anspruch 1, wobei der zweite Typ von Endgerät ferner einen dritten Typ von Endgerät umfasst.

9. Verfahren nach Anspruch 9, wobei die Ressourcenbelegungsidentifikationsinformationen so konfiguriert sind, dass sie eine Ressourcenblockbelegung in einer überlappenden Ressourcenblockgruppe des ersten Typs von Endgerät und des zweiten Typs von Endgerät und des dritten Typs von Endgerät angeben.

10. Ressourcennutzungsverfahren, das auf ein Endgerät angewendet wird, umfassend:
Empfangen (S201) von Ressourcenbelegungsidentifikationsinformationen, die von einer Netzwerkvorrichtung übertragen werden, wobei die Ressourcenbelegungsidentifikationsinformationen von der Netzwerkvorrichtung gemäß Ressourcenkonfigurationsinformationen, die einem ersten Typ von Endgerät entsprechen, und
Ressourcenkonfigurationsinformationen, die einem zweiten Typ von Endgerät entsprechen, erzeugt werden und so konfiguriert sind, dass sie eine Ressourcenblockbelegung in einer überlappenden Ressourcenblockgruppe des ersten Typs von Endgerät und des zweiten Typs von Endgerät angeben, wobei die Ressourcenblockbelegung so konfiguriert ist, dass sie angibt, ob ein unbelegter Ressourcenblock in der überlappenden Ressourcenblockgruppe existiert; und
Nutzen (S202) der Ressourcen gemäß den Ressourcenbelegungsidentifikationsinformationen.

11. Verfahren nach Anspruch 10, wobei das Nutzen der Ressourcen gemäß den Ressourcenbelegungsidentifikationsinformationen umfasst:
Erhalten eines Zielressourcenblocks durch Parsen der Ressourcenbelegungsidentifikationsinformationen, wobei der Zielressourcenblock ein unbelegter Ressourcenblock in der überlappenden Ressourcenblockgruppe des ersten Typs von Endgerät und des zweiten Typs von Endgerät ist; und Nutzen der Ressourcen gemäß dem Zielressourcenblock.

12. Netzwerkvorrichtung, umfassend:
einen Prozessor (301), einen Speicher (302), ein Computerprogramm, das auf dem Speicher (302) gespeichert und durch den Prozessor (301) ausführbar ist, und einen Datenbus (303), der so konfiguriert ist, dass er eine verbindende Kommunikation zwischen dem Prozessor (301) und
dem Speicher (302) implementiert, wobei das Computerprogramm so konfiguriert ist, dass es bei Ausführung durch den Prozessor (301) Schritte des Ressourcenplanungsverfahrens nach einem der Ansprüche 1 bis 10 implementiert.

13. Endgerät, umfassend:
einen Prozessor (401), einen Speicher (402), ein Computerprogramm, das auf dem Speicher (402) gespeichert und durch den Prozessor (401) ausführbar ist, und einen Datenbus (403), der so konfiguriert ist, dass er eine verbindende Kommunikation zwischen dem Prozessor (401) und
dem Speicher (402) implementiert, wobei das Computerprogramm so konfiguriert ist, dass es bei Ausführung durch den Prozessor (401) Schritte des Ressourcennutzungsverfahrens nach einem der Ansprüche 10 bis 11 implementiert.

14. Computerlesbares Speichermedium, das ein oder mehrere Programme speichert, wobei das eine oder die mehreren Programme so konfiguriert sind, dass sie bei Ausführung durch einen oder mehrere Prozessoren die Netzwerkvorrichtung veranlassen, Schritte des Ressourcenplanungsverfahrens nach einem der Ansprüche 1 bis 9 zu implementieren, oder das Endgerät veranlassen, Schritte des Ressourcennutzungsverfahrens nach einem der Ansprüche 10 bis 11 zu implementieren.

15. Computerprogramm, umfassend Anweisungen,
wobei das Computerprogramm bei Ausführung durch einen Prozessor die Netzwerkvorrichtung veranlasst, Schritte des Ressourcenplanungsverfahrens nach einem der Ansprüche 1 bis 9 durchzuführen, oder das Endgerät veranlasst, Schritte des Ressourcennutzungsverfahrens nach einem der Ansprüche 10 bis 11 durchzuführen.

## Revendications

1. Procédé de planification de ressources, appliqué à un dispositif de réseau, comprenant :
obtenir (S101) des informations de configuration de ressources correspondant à un premier type de dispositif terminal et des informations de configuration de ressources correspondant à un deuxième type de dispositif terminal ; et
générer (S102) des informations d'identification d'occupation de ressource selon les informations de configuration de ressource obtenues, transmettre les informations d'identification d'occupation de ressource au premier type de dispositif terminal, et amener le premier type de dispositif terminal à planifier les ressources selon les informations d'identification d'occupation de ressource, dans lequel les informations d'identification d'occupation de ressource sont configurées pour indiquer une occupation de bloc de ressource dans un groupe de blocs de ressource se chevauchant du premier type de dispositif terminal et du deuxième type de dispositif terminal, dans lequel l'occupation de bloc de ressource est configurée pour indiquer si un bloc de ressource inoccupé existe dans le groupe de blocs de ressource se chevauchant.

2. Procédé selon la revendication 1, dans lequel les informations de configuration de ressources comprennent une largeur de bande d'une partie de largeur de bande, et une largeur de bande d'une partie de largeur de bande correspondant au premier type de dispositif terminal et une largeur de bande d'une partie de largeur de bande correspondant au deuxième type de dispositif terminal ont un bloc de ressources se chevauchant.

3. Procédé selon la revendication 2, dans lequel les informations de configuration de ressource comprennent en outre l'utilisation de ressource de la partie de bande passante, et la génération d'informations d'identification d'occupation de ressource selon les informations de configuration de ressource comprend :
déterminer si le premier type de dispositif terminal et le deuxième type de dispositif terminal utilisent le même groupe de blocs de ressources en fonction de l'utilisation des ressources de la partie bande passante ;
déterminer l'occupation de bloc de ressources du même groupe de blocs de ressources en fonction de la bande passante de la partie bande passante dans le cas où le premier type de dispositif terminal et le deuxième type de dispositif terminal utilisent le même groupe de blocs de ressources ; et
générer les informations d'identification d'occupation de ressource en fonction de l'occupation de bloc de ressource du même groupe de blocs de ressource.

4. Procédé selon la revendication 3, dans lequel la détermination de l'occupation de bloc de ressources du même groupe de blocs de ressources en fonction de la bande passante de la partie bande passante comprend :
déterminer si un bloc de ressources inoccupé existe dans le même groupe de blocs de ressources en fonction de la bande passante de la partie bande passante ;
déterminer que le bloc de ressources inoccupé est un bloc de ressources cible dans le cas où le bloc de ressources inoccupé existe dans le même groupe de blocs de ressources; et
déterminer l'occupation du bloc de ressources du même groupe de blocs de ressources en fonction du bloc de ressources cible.

5. Procédé selon la revendication 1, dans lequel le premier type de dispositif terminal comprend un dispositif terminal correspondant à un scénario à large bande mobile amélioré, et le deuxième type de dispositif terminal comprend un ou plusieurs parmi un dispositif terminal correspondant à un scénario de capacité réduite, un dispositif terminal correspondant à un scénario de communication ultra-fiable et à faible latence, et un dispositif terminal correspondant à un scénario de communication de type machine massive.

6. Procédé selon la revendication 2, la bande passante de la partie bande passante correspondant au premier type de dispositif terminal est plus large que la bande passante de la partie bande passante correspondant au deuxième type de dispositif terminal, ou la bande passante de la partie bande passante correspondant au premier type de dispositif terminal est plus étroite que la bande passante de la partie bande passante correspondant au deuxième type de dispositif terminal.

7. Procédé selon la revendication 1, dans lequel les informations d'identification d'occupation de ressource sont transportées dans des informations de commande de liaison descendante (en Anglais « downlink control information » pour DCI), et transmises au premier type de dispositif terminal.

8. Procédé selon la revendication 1, le deuxième type de dispositif terminal comprenant en outre un troisième type de dispositif terminal.

9. Procédé selon la revendication 9, dans lequel les informations d'identification d'occupation de ressource sont configurées pour indiquer une occupation de bloc de ressource dans un groupe de blocs de ressource se chevauchant du premier type de dispositif terminal et du deuxième type de dispositif terminal et du troisième type de dispositif terminal.

10. Procédé d'utilisation de ressources, appliqué à un dispositif terminal, comprenant :
recevoir (S201) des informations d'identification d'occupation de ressource qui sont transmises par un dispositif de réseau, dans lequel les informations d'identification d'occupation de ressource sont générées par le dispositif de réseau selon des informations de configuration de ressource correspondant à un premier type de dispositif terminal et des informations de configuration de ressource correspondant à un deuxième type de dispositif terminal, et sont configurées pour indiquer une occupation de bloc de ressource dans un groupe de blocs de ressource se chevauchant du premier type de dispositif terminal et du deuxième type de dispositif terminal, dans lequel l'occupation de bloc de ressource est configurée pour indiquer si un bloc de ressource inoccupé existe dans le groupe de blocs de ressource se chevauchant ; et
utiliser (S202) les ressources en fonction des informations d'identification d'occupation de ressource.

11. Procédé selon la revendication 10, dans lequel l'utilisation des ressources selon les informations d'identification d'occupation de ressource comprend :
obtenir un bloc de ressources cible en analysant les informations d'identification d'occupation de ressource, dans lequel le bloc de ressources cible est un bloc de ressources inoccupé dans le groupe de blocs de ressources se chevauchant du premier type de dispositif terminal et du deuxième type de dispositif terminal ; et
utiliser les ressources en fonction du bloc de ressources cible.

12. Dispositif de réseau, comprenant :
un processeur (301), une mémoire (302), un programme informatique qui est stocké sur la mémoire (302) et exécutable par le processeur (301), et un bus de données (303) configuré pour mettre en œuvre une communication connective entre le processeur (301) et la mémoire (302), dans lequel le programme informatique est configuré pour, lorsqu'il est exécuté par le processeur (301), mettre en œuvre des étapes du procédé de planification de ressources selon l'une quelconque des revendications 1 à 10.

13. Dispositif terminal, comprenant :
un processeur (401), une mémoire (402), un programme informatique qui est stocké sur la mémoire (402) et exécutable par le processeur (401), et un bus de données (403) configuré pour mettre en œuvre une communication connective entre le processeur (401) et la mémoire (402), dans lequel le programme informatique est configuré pour, lorsqu'il est exécuté par le processeur (401), mettre en œuvre des étapes du procédé utilisant des ressources selon l'une quelconque des revendications 10 à 11.

14. Support de stockage lisible par ordinateur, stockant un ou plusieurs programmes, dans lequel le ou les programmes sont configurés pour, lorsqu'ils sont exécutés par un ou plusieurs processeurs, amener le dispositif de réseau à mettre en œuvre les étapes du procédé de planification de ressources selon l'une quelconque des revendications 1 à 9, ou amener le dispositif de terminal à mettre en œuvre les étapes du procédé d'utilisation de ressources selon l'une quelconque des revendications 10 à 11.

15. Programme informatique comprenant des instructions, dans lequel le programme informatique, lorsqu'il est exécuté par un processeur, amène le dispositif de réseau à exécuter les étapes du procédé de planification de ressources selon l'une quelconque des revendications 1 à 9, ou amène le dispositif de terminal à exécuter les étapes du procédé d'utilisation de ressources selon l'une quelconque des revendications 10 à 11.
